# EUROPEAN PATENT APPLICATION

(11) **EP 4 661 388 A1**
(43) Date of publication of application: **10.12.2025**
(21) Application number: 24180420.2
(22) Date of filing: 06.06.2024
(51) Int. Cl.: H04N 9/31

(54) **MARKER PROJECTION DEVICE**

(71) Applicant: Fraunhofer-Gesellschaft zur Förderung der angewandten Forschung e.V., 80686 München (DE)
(72) Inventor: Giannakidis, Alexandros, 70569 Stuttgart (DE)
(74) Representative: Pfenning, Meinig & Partner mbB

(57) **Abstract**

In the disclosure, a marker projection device (100) for use in an augmented-reality system is described. The marker projection device (100) comprises a control unit that receives depth information data indicative of distances to surfaces (202A-C, 204, 206) in the environment of the marker projection device (100) and a marker image indicative of a visual appearance of a fiducial marker. Furthermore, the control unit is configured: to identify one or more potential projection surfaces (202A-C, 204, 206) in the environment using the depth information data; to select one (202B) of the one or more potential projection surfaces; to determine a projection angle (220A, 220B) for the selected projection surface; and to generate, using the depth information data and the projection angle for the selected projection surface, a projection image comprising an adapted marker image, wherein the control unit is configured to generate the adapted marker image by transforming the marker image such that geometrical proportions of the visual appearance of the fiducial marker are preserved when projected on the selected projection surface (202B). In addition, the marker projection device (100) comprises an optical projection unit that receives the projection image and is configured to generate a light projection according to the projection image.

## Description

This disclosure relates to a marker projection device for use in an augmented reality system, an augmented reality system comprising the marker projection device, and a method for projecting a marker.

Augmented reality (AR) is an experience in which a physical environment of a user is combined with computer-generated virtual content (such as text, graphics, and other media). For the user to immerse into the augmented reality experience, an augmented reality device is used through which the user observes the physical world and which is configured to place the virtual content into the physical environment of the user to see.

In AR, one objective is to seamlessly blend the virtual content with the real world. For this integration to be effective, virtual content must be placed accurately within the real-world environment. This means the virtual content should appear stable, correctly positioned, oriented, and scaled with respect to the real-world context including the user. This process of aligning the virtual and physical "worlds" such that the virtual content appears correctly placed and oriented within the real environment is also referred to in the field of AR as registering. An inaccurately registered object might float around, jitter or appear out of place, breaking the illusion of AR.

The technical solutions applied for the registering of virtual objects in AR can be divided into marker-based and markerless solutions.

In marker-based solutions, markers, often referred to as fiducial markers or fiducials, are used. A fiducial marker is a physical object that is placed into the real world to provide a frame of reference for an imaging system. The use of physical markers can simplify the registration process by providing known reference points. Marker-based registering and tracking, also referred to as marker-based AR, is the most precise and robust registering solution. Registering using fiducial markers come at a low computational cost and can achieve subpixel accuracy. However, for use in dynamic (that is frequently changing), arbitrary or larger environments, a placement of fiducial markers is often not a suitable solution. In addition, physical markers degrade over time and need maintenance.

To overcome those shortcomings various markerless registering and tracking solutions have been developed, of which some will be described in the following.

A class of solutions referred to as Simultaneous Localization and Mapping (SLAM) allows an AR system to map a previously unknown environment while simultaneously keeping track of the user's position within it. Registering of virtual content can be performed using the mapped environment and the tracked position of the user.

In another approach to markerless registering, depth sensors like LiDAR or depth cameras are used for obtaining the required information to accurately register virtual content in the physical environment.

In yet another approach, feature detection is used for registering. In this approach, computer vision algorithms are used to detect features such as planes and boundaries in the real world environment for assisting in the alignment of virtual content.

Lastly, another approach for a markerless solution is the use of systems and sensors such as GPS, accelerometers, proximity sensors or digital compasses such that location-based AR applications can provide content that is relevant to a specific geographical position.

However, these approaches also show a number of short comings. Inaccuracies from sensors, like Inertial Measurement Unit (IMU) or GPS, can degrade registration. For instance, drift over time in IMU data can lead to increasing registration errors. SLAM algorithms rely on identifiable features in the environment. If the environment lacks distinct features (e.g., a plain white wall), the system might struggle to track its position. Delays between sensing the environment and rendering virtual objects can also cause misalignment.

In order to address the shortcomings of the marker-based approach and the markerless approaches, a number of techniques have been developed. In particular with regard to dynamic environments, the following techniques have been explored:
- High Frame Rate Cameras: Using a camera with a higher frame rate can help in reducing motion blur and providing more data points for tracking, improving stability.
- Sensor Fusion: By combining data from multiple sensors, such as the camera, gyroscopes, and accelerometers, it is possible to achieve more robust and resilient tracking. For instance, gyroscopes can quickly detect changes in orientation.
- Better tracking algorithms: For example, predictive algorithms that predict the AR user's motion based on recent movement trends. By anticipating where the user will be a fraction of a second in the future, the system can pre-emptively adjust the augmented content. Hybrid tracking algorithms work by utilizing a combination of marker-based, markerless, and sensor-based tracking. This makes the system more resilient. For instance, if visual feature tracking fails due to changes in the environment, sensor data (from accelerometers or gyroscopes) can help maintain tracking for short periods as is explained in, for example, Hubner, P. et al. (2018) "Combining independent visualization and tracking systems for augmented reality," ISPRS - International Archives of the Photogrammetry Remote Sensing and Spatial information Sciences, XLII-2, pp. 455-462. doi: 10.5194/isprs-archives-xlii-2-455-2018. Robustness of algorithms has also been addressed, designing them for challenging conditions, such as those that can handle motion blur or quickly recover from tracking losses.
- Optimized Hardware and Software: Use AR hardware and software optimized for low latency. Efficiently processed data ensures that augmented content can be rendered as quickly as possible in response to user movements.
- Feedback Mechanisms: Provide feedback to users when tracking is likely to be less accurate (e.g., visual or auditory cues). This can help users adjust their behavior, like slowing down, to improve the AR experience.
- Deep Learning: Neural network models can be trained to aid in pose estimation, especially in challenging or feature-poor environments.
- Loop Closure: To counteract drift, systems can recognize previously visited places and adjust the current pose estimation to align with the known pose from the past.

However, despite these advancements, achieving perfect registration in dynamic environments scenes remains a challenge in the AR domain. All the above-mentioned methods have limitations and most of them rely on shared sensor data for correction mechanisms. Eventually registration errors pile up and the illusion is interrupted.

In order to address these shortcomings, the object of the following disclosure is to provide an alternative approach to support registering of virtual objects in AR.

This alternative approach is realized in a first aspect by a marker projection device for use in an augmented-reality system according to claim 1 and in a second aspect by a method for projection of a marker according to claim 15.

First, details of the marker projection device will be described. Afterwards, further details of the method for projection of a marker will be given.

The marker projection device according to the first aspect of this disclosure comprises a control unit and an optical projection unit.

The control unit is configured to receive depth information data indicative of distances to surfaces in the environment of the marker projection device and a marker image indicative of a visual appearance of a fiducial marker.

Furthermore, the control unit is configured:
to identify one or more potential projection surfaces in the environment using the depth information data,
to select one of the one or more potential projection surfaces,
to determine a projection angle for the selected projection surface, and
to generate, using the depth information data and the projection angle for the selected projection surface, a projection image comprising an adapted marker image, wherein the control unit is configured to generate the adapted marker image by transforming the marker image such that geometrical proportions of the visual appearance of the fiducial marker are preserved when projected on the selected projection surface.

Lastly, the optical projection unit is configured to receive the projection image and to generate a light projection according to the projection image.

The marker projection device can be used to project fiducial markers onto surfaces on-demand. The marker projection device can, for example, be stationary located or alternatively move with the AR user. In case of a stationary use, the marker projection device can be used to provide fiducial markers on different surfaces according to the changing needs of different AR scenes or a changing environment. In the case that the marker projection device moves with the AR user, the marker projection device can be used to project fiducial markers also in spaces that have not been previously prepared with physical fiducial markers. In both scenarios, the advantage of an accurate registering using fiducial markers can be used while at the same time spaces do not have to be prepared with fiducial markers in advance. Furthermore, the projected fiducial markers can be used in hybrid tracking algorithms to recalibrate one or more sensors used for determining a position and/or pose of the AR user. As described above, those sensors accumulate errors over time leading to inaccuracies when registering virtual objects in the real world. The projected markers can be used as ground truth, i.e. information about the environment determined directly by measurements, to, for example, periodically recalibrate the one or more sensors and reduce errors in the placement of virtual content.

In the description of the marker projection device given above, the term projection angle is to be understood as that angle under which light has to be emitted from the optical projection unit for the marker image to be projected onto the selected projection surface.

Furthermore, the phrase that geometrical proportions of the appearance of the fiducial marker are preserved when projected on the selected projection surface is to be understood in the meaning that one or more angles between lines comprised in the visual appearance of the fiducial marker according to the marker image are preserved in the projected fiducial marker and/or that a proportion of two lines including an angle in the visual appearance of the fiducial marker according to the marker image is preserved in the projected fiducial marker.

In the following, further optional details of the marker projection device will be described.

In one embodiment of the marker projection device, the transformation of the marker image can comprise a keystone correction and/or a projection mapping. The keystone correction can include a one-dimensional keystone correction with respect to one axis or a two-dimensional keystone correction with respect to two orthogonal axes. The projection mapping can comprise a mapping of a marker image onto the selected projection surface, which is non-planar. Projection mapping is, for example, described in Ryu, B. and Bae, S.-H. (2018) "Display in the Wild (DIW): An adaptive projection-imaging system to screen geometry in real time," Sensors (Basel, Switzerland), 18(9), p. 3063. doi: 10.3390/s18093063.

In another embodiment, the control unit can be configured
to receive motion data indicative of a movement of the marker projection device,
to generate an updated projection angle using the determined projection angle and the motion data,
to generate an updated projection image using the updated projection angle, and
to provide the updated projection image to the optical projection unit. This embodiment can be used to project a marker onto the selected projection surface and preserving the geometrical proportions even in the case that the marker projection device is moved relative to the selected projection surface during the projection.

In variants of this embodiment, the control unit can be configured to generate the motion data by comparing the depth information data as used for generating the light projection and updated depth information data indicative of distances to surfaces in the environment of the marker projection device at a later point in time.

In another embodiment, the marker projection device can be configured to determine when to generate the light projection and/or for how long to generate the light projection, for example, using timing information and generate the light projection accordingly. In variants of this embodiment, the marker projection device can comprise a communication interface configured to receive the timing information from an external device. In other variants, the marker projection device comprises a memory unit for storing the timing information.

In one embodiment, the optical projection device can additionally or alternatively to the previously described optional features be configured to use visible light, infrared light, and/or ultraviolet light for generating the light projection. Expressed differently, the optical projection device can be configured to generate machine-readable light projections, i.e. light projections that can be detected with a computer-vision system.

In yet another embodiment, the marker projection device can comprise a projection-direction actuator unit that is mechanically connected with the optical projection unit and that receives the determined projection angle and is configured to adjust an orientation of the optical projection unit in accordance with the determined projection angle. In this embodiment, projection-direction actuator can enable a projection of the light projection in a wide range of angles.

In variants of this embodiment, the projection-direction actuator unit can be configured to adjust an orientation of the optical projection device in up to three degrees of freedom. In other variants, the projection-direction actuator unit is configured to orient the optical projection device in a solid angle of 360 degrees, i.e. covering all angles of a half-sphere. Examples of fast three degree-of-freedom camera-orientation devices are, for example, given in Gosselin, C. M. and St-Pierre, É. (1997) "Development and experimentation of a fast 3-DOF camera-orienting device," The international journal of robotics research, 16(5), pp. 619-630. doi: 10.1177/027836499701600503.

In a further embodiment, the marker projection device can comprise additionally or alternatively to the features of the preceding embodiments an inertial measurement unit, a compensation controller, and a motion-compensation actuator unit. The inertial measurement unit is configured to determine and provide inertia measurement data indicative of a motion of the optical projection unit. Furthermore, the compensation controller receives the inertia measurement data and is configured to determine, using the inertia measurement data, counter-motion data indicative of a required motion of the optical projection unit to at least partly counteract the motion of the optical projection unit. Lastly, the motion-compensation actuator unit is mechanically connected with the optical projection unit, receives the counter-motion data, and is configured to perform a movement of the optical projection unit according to the counter-motion data. These features can be used to reduce fiducial marker projection shake and subsequent jitter of anchored virtual content.

In variants of this embodiments, the compensation actuator unit can comprise a platform mounted on a gimbal with a plurality of actuators, wherein the optical projection device is mechanically connected to the platform and the actuators are configured to move the gimbal according to the counter-motion data.

In another embodiment, the control unit can be configured to receive orientation data indicative of a positioning of the marker projection device in the environment relative to a frame of reference. Moreover, the control unit can be configured to generate the projection image using the orientation data such that the visual appearance of the fiducial marker is correctly oriented relative to the frame of reference when projected on the selected projection surface. These features can assist in, for example, projecting a marker right-side up even though the marker projection device is placed upside down with respect to the frame of reference.

In variants of this embodiment, the marker projection unit can comprise an orientation sensor that is configured to generate the orientation data. In other variants, the marker projection unit comprises a communication interface for receiving the orientation data from an external device. The external device can, for example, be an augmented reality device as described later with regard to the augmented reality system.

In another embodiment of the marker projection device, the control unit can be configured to receive color information data indicative of a color of the selected projection surface, and to adjust a color of the adapted marker image using the color information data. These features can be advantageous to provide a projection image that, when projected onto the selected projection surface, provides a contrast between the visual appearance of the marker as projected on the surface and the surface itself.

In variants of this embodiment, the marker projection unit can comprise a color sensor that is configured to generate the color information data. In other variants, the marker projection unit can comprise a communication interface for receiving the color information data from an external device.

In another embodiment of the marker projection device, the control unit can be configured to determine a distance between the optical projection unit and the selected projection surface. In addition, the optical projection unit can further comprise a lens system for projecting the projection image onto the selected projection surface, wherein the optical projection unit is configured to adjust the lens system according to the determined distance to focus the light projection of the generated image on the selected projection surface. This set of features can be advantageous for a sharp projection image of the marker onto the selected projection surface.

In variants of this embodiment, the control unit can be configured to determine the distance using the depth information data. In other variants, the marker projection unit can comprise a communication interface for receiving the distance from an external device. In yet another variant, the marker projection device can comprise a separate sensor for determining the distance.

In another embodiment, the control unit can receive ambient-light-condition data indicative of an ambient light condition in the environment of the marker projection device and can be configured, using the ambient-light-condition data, to determine a brightness level required for the light projection of the fiducial marker. In addition, the optical projection unit receives the brightness level and is configured to adjust a brightness of the light projection according to the determined brightness level. This set of features can be advantageous to provide a sufficiently bright projection of the marker in accordance to brightness levels of the environment of the marker projection device.

In variants of this embodiment, the marker projection device can comprise an ambient-light-condition sensor that is configured to generate the ambient-light-condition data. In other variants, the marker projection unit can comprise a communication interface for receiving the ambient-light-condition data from an external device.

In yet another embodiment, the marker projection device can comprise in addition or alternatively to the optional features of the above described embodiments a sensor unit that is configured to determine and provide the depth information data. The sensor unit can be advantageous for operating the marker projection device independently.

There are a plurality of sensors that can be used to determine the depth information data. For example, the following sensor systems may be used alone or in combination: stereo vision cameras, structured light sensors, Time-of-Flight (ToF) cameras, Light Detection and Ranging (LiDAR) sensors, ultrasonic sensors, radar, laser range finders.

In variants of this embodiment, the sensor unit can comprise for determining the depth information data, for example, a LiDAR unit.

In addition or as an alternative, the marker projection device can comprise a communication interface for receiving the depth information data from an external device.

In another embodiment, the marker projection device can comprise alternatively or additionally to the features of the embodiments already described a memory unit for storing selection criteria for selecting the one of the one or more potential projection surfaces. Furthermore, the control unit can be configured to select the one of the one or more potential projection surfaces using the stored selection criteria.

In yet another embodiment, the marker projection device can comprise a communication interface for communicating with an external device such as the augmented-reality device. In addition, the control unit can be configured to provide potential-projection-surface data indicative of the identified one or more potential projection surfaces at the communication interface, and to select the one out of the one or more potential projection surfaces according to selection data received through the communication interface in response to the provided potential-projection-surface data. These features enable the placement of fiducial markers as required by, for example, the AR device.

In variants of this embodiment and other embodiments comprising the communication interface, the communication interface can comprise a wireless communication interface for wireless communication such as, for example, a Bluetooth, a Wi-Fi and/or cellular communication interface. Additionally or alternatively, the communication interface can comprise a cable-bound communication interface, for example, an Ethernet communication interface and/or a USB communication interface. In other variants, the interface can simply be a connection wiring in the case that the marker projection device and the external device, such as the augmented reality device are integrated into a single device or system.

In another embodiment, the marker projection device can comprise a user interface for receiving user input data. In addition, the control unit can be configured to select the one of the one or more potential projection surfaces according to the user input data. With the help of the user interface, fiducial markers can be placed as desired by the AR user.

In variants of this embodiment, the user interface can comprise buttons and/or other touch-sensitive areas.

In various embodiments, the marker projection device can comprise in addition or as an alternative to the features of the previously described embodiments a power source, such as for example a primary battery and/or secondary battery.

In other embodiments, the marker projection device can comprise an attachment unit for attaching the marker projection device to an external object. This attachment unit can, for example, comprise a clip, a magnet, a band, and/or an adhesive surface.

There are a plurality of image types that can be used as fiducial markers. Examples are AprilTag, ARTag, ARToolKit Plus, reacTIVision, CALTag, RUNE-Tag, Pi-Tag, CCTag, ChromaTag, TopoTag, Mono-Spectrum markers. Further possible image types are disclosed in the "Related Work" section of the publication Košt́ák, M.; Slabý, A. Designing a Simple Fiducial Marker for Localization in Spatial Scenes Using Neural Networks. Sensors 2021, 21, 5407. In another embodiment, the marker image can be a machine-readable code, for example, a QR-code.

In another embodiment, the marker projection device can comprise a device housing in which the control unit, the optical projection unit, and any other components of the marker projection device are comprised, wherein the device housing comprises a handle for gripping and pointing of the marker projection device by the user.

Furthermore, the marker projection device can be comprised in an augmented reality system. In addition to the marker projection device, the augmented-reality system can include an augmented-reality device comprising a screen configured to receive visualization information data and to overlay a visual representation of the visualization information data with visual information from a physical environment of the augmented reality device. In embodiments, the AR device can comprise a control unit that is configured to provide the visualization information data. Alternatively, the marker projection device and the AR device can comprise a shared control unit, wherein the shared control unit is configured to provide all the functionality of the control unit of the marker projection device as well as to provide the visualization information data.

In different embodiments of the AR system, the augmented reality device can comprise a sensor unit configured to generate the depth information data, wherein the AR device can be configured to provide the depth information data to the marker projection device. In other embodiments, the augmented reality device can be configured to provide timing information to the marker projection device indicative of when to generate the light projection and/or for how long to generate the light projection. In other embodiments, the augmented reality device can comprise a user interface for determining user input data and provide the user input data to the marker projection device. In variants of this embodiment, the control unit of the marker projection device is configured to use the user input data for selecting the one out of the one or more potential projection surfaces.

Following the marker projection device, the method for projection of a fiducial marker according to the second aspect of the disclosure will be described in the following. The method comprises the following steps:
receiving depth information data indicative of distances to surfaces in an environment of the marker projection device and a marker image indicative of a visual appearance a fiducial marker,
identifying one or more potential projection surfaces in the environment using the depth information data,
selecting one of the one or more potential projection surfaces, and
generating, using the depth information data and the projection angle for the selected projection surface, a projection image comprising an adapted marker image, wherein the adapted marker image is generated by transforming the marker image such that geometrical proportions of the visual appearance of the fiducial marker are pre-served when projected on the selected projection surface; and
generating a light projection according to the projection image.

In the following, further optional features of the method according to the second aspect are described.

In some embodiments of the method, these method steps can be executed recurrently multiple times.

In other embodiments, the method can comprise the following additional step:
receiving motion data indicative of a movement of the marker projection device,
generating an updated projection angle using the determined projection angle and the motion data,
generating an updated projection image using the updated projection angle, and
providing the updated projection image to the optical projection unit.

This embodiment can be used to project a marker onto the selected projection surface and preserving the geometrical proportions even in the case that the marker projection device is moved relative to the selected projection surface during the projection.

In variants of this embodiment, also these steps can be executed recurrently.

In the following, different embodiments of the marker projection device and the method for projection of a marker will be described with reference to the figures. To provide an overview of the figures, a short description of each of the figures will be given first.
- Fig. 1a: shows a marker projection device for use in an augmented-reality system that comprises a fixed optical projection unit;
- Fig. 1b: shows details of the optical projection unit comprised by the marker projection device of Fig. 1a;
- Fig. 2a: shows the marker projection device of Fig. 1a in an indoor space when generating a light projection without an adaption of the marker image;
- Fig. 2b: shows the marker projection device of Fig. 1a in the same indoor space when generating a light projection with an adaption of the marker image including a keystone correction;
- Fig. 3: shows a marker projection device that comprises a optical projection unit that is movable through a projection-direction actuator unit;
- Figs. 4a-c: show an example of the projection-direction actuator unit used with a marker projection device similar to that of Fig. 3 oriented in different projection directions;
- Fig. 5: shows an AR user who is running and has the marker projection device of Fig. 3 strapped to their head;
- Fig. 6: shows an augmented reality system comprising a AR device and a marker projection device mounted on a spectacle frame;
- Fig. 7: shows a method for projection of a fiducial marker for the case of a stationary marker projection device;
- Fig. 8: shows a method for projection of a fiducial marker for the case of a moving marker projection device; and
- Fig. 9: shows a method for projection of a fiducial marker used with a marker projection device comprising a projection-direction actuator unit.

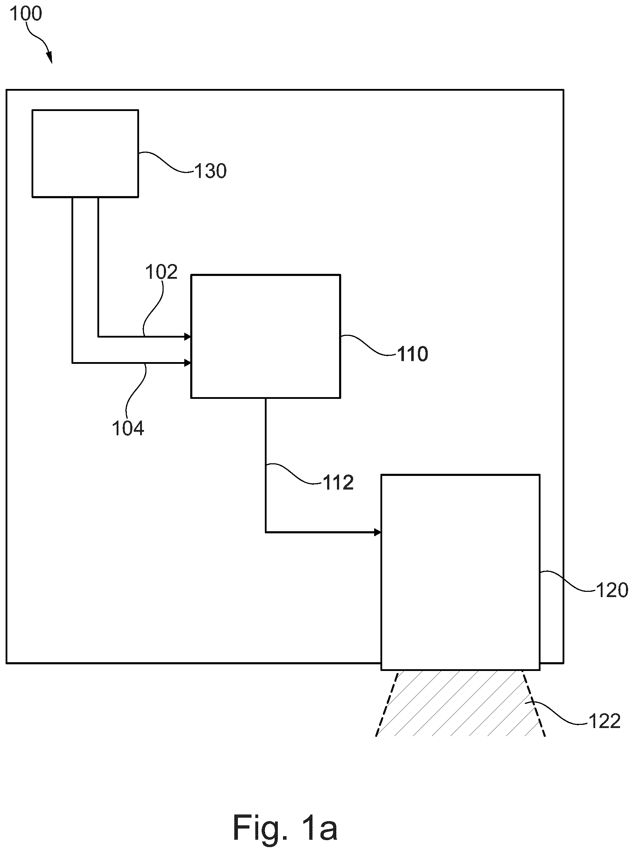

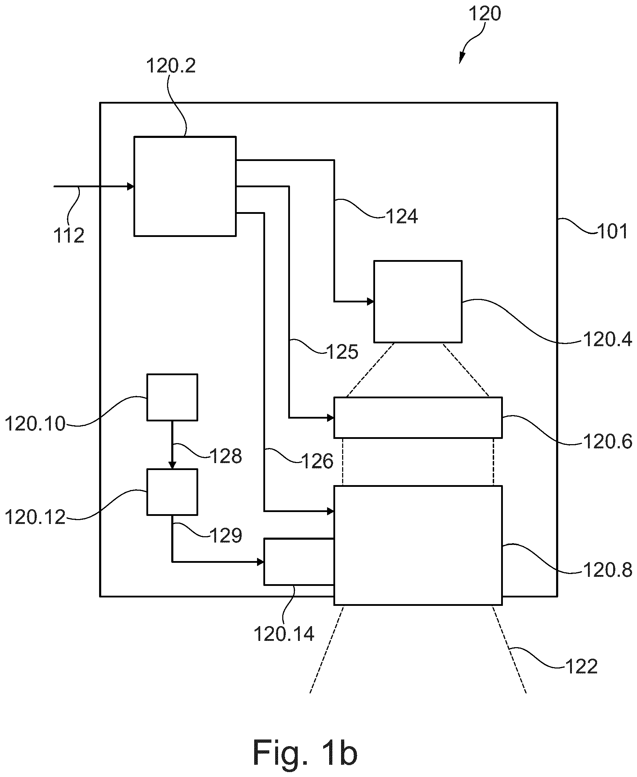

In the following, the embodiments shown in the figures will be described in detail. The description will start with the embodiment shown in Fig. 1a and 1b.

In these and all following drawings, components that have already been introduced in previous drawings will be marked with the same reference signs.

Fig. 1a shows a marker projection device 100 for use in an augmented reality system that comprises a fixed optical projection unit 120.

The marker projection device 100 comprises a control unit 110 and the optical projection unit 120 that are arranged within a device housing 101.

The control unit 110 receives depth information data 102 indicative of distances to surfaces in the environment of the marker projection device 100 and a marker image 104 indicative of a visual appearance of a fiducial marker.

Furthermore, the control unit 110 is configured to identify one or more potential projection surfaces in the environment using the depth information data, to select one of the one or more potential projection surfaces, and to determine a projection angle for the selected projection surface. The determined projection angle provides information about the angle under which light has to be emitted from the optical projection unit for the marker image to be projected onto the selected projection surface.

The potential surfaces in the depth information data can, for example, be identified by identifying contiguous planar and/or non-planar areas within the depth information data. In addition, in certain embodiments, only surfaces with a predetermined minimal area are taken into account as potential projection surfaces.

Lastly, the control unit 110 is configured to generate, using the depth information data 102 and the projection angle for the selected projection surface, a projection image 112 comprising an adapted marker image, wherein the control unit 110 is configured to generate the adapted marker image by transforming the marker image 104 such that geometrical proportions of the visual appearance of the fiducial marker are preserved when projected on the selected projection surface.

The control unit 110 can, for example, be implemented as a system-on-a-chip or any other integrated circuit. It may include hardware description languages, firmware/software Application Programming Interfaces (APIs), device drivers or other interfaces for hardware configuration.

The optical projection unit 120 receives the projection image 112 and is configured to generate a light projection 122 according to the projection image 112.

In the case of the marker projection device 100, the depth information data 102 and the marker image 104 are both provided externally and received through a communication interface 130 comprised by the marker projection device 100. The depth information data 102 and the marker image 104 can be received separately or, for example, as part of AR session data provided by an AR device. In the context of AR software development, particularly with frameworks like Apple's ARKit, Google's ARCore or W3C's WebXR, an AR session represents the single, continuous period in which the AR-device captures and processes live camera feed to overlay and integrate virtual objects into the real-world environment.

In the embodiment shown in Fig. 1, the communication interface 130 comprises a Bluetooth interface for receiving data wirelessly. However, this is just an example. In other embodiments, the communication interface 130 can comprise alternatively or additionally other wireless communication interfaces such as a Wi-Fi interface or a cellular communication interface. It is also possible that the communication interface 130 comprises an electrical connection such as a USB connector or an Ethernet connector for cable-bound communication.

In the following, the optical projection unit 120 will be described in detail with reference to Fig. 1b. Fig. 1b shows details of the optical projection unit 120 comprised by the marker projection device 100 of Fig. 1a.

As already described above, the optical projection unit 120 receives the projection image 112 and is configured to generate a light projection according to the projection image 112. Various implementations of the optical projection unit 120 are possible using, for example, Digital Light Processing (DLP), Liquid Crystal on Silicon (LCoS), Laser Beam Steering (LBS) or other projection techniques. In the example of the optical projection unit 120 as shown in Fig. 1b, the optical projection unit 120 is realized using DLP.

To this end, the optical projection unit 120 comprises a projection controller 120.2, a light source 120.4, a light modulation unit 120.6 including a plurality of micromirrors, and a lens system 120.8.

The projection controller 120.2 is configured to receive the projection image 112 and to provide an activation signal 124 to the light source 120.4 to activate the light source 120.4. Furthermore, the projection controller 120.2 is configured to generate, according to the projection image 112, a modulation-control signal 125 for positioning of the micro mirrors of the light modulation unit 120.6. The lens system 120.8 is configured to shape the light emitted by the light source 120.4 and modulated by the light modulation unit 120.6 for a light projection onto the selected projection surface.

In addition to the described components required for the emission of the modulated light according to the projection image 112, the optical projection unit 120 can also comprise active or passive projection stabilization mechanisms. In the example of Fig. 1b, the optical projection unit 120 comprises an active projection stabilization mechanism including an inertial measurement unit 120.10 that is configured to determine and provide inertia measurement data 128 indicative of a motion of the optical projection unit 120. Furthermore, the optical projection unit 120 comprises a compensation controller 120.12 that receives the inertia measurement data 128 and is configured to determine, using the inertia measurement data 128, counter-motion data 129 indicative of a required motion of the optical projection unit 120 to at least partly counteract the motion of the optical projection unit 120. Moreover, the optical projection unit comprises a motion-compensation actuator unit 120.14 that is mechanically connected with lens system 120.8, receives the counter-motion data 129 and is configured to perform a movement of the lens system 120.8 according to the counter-motion data 129.

The described projection stabilization mechanism of the optical projection unit 120 is just an example. In other embodiments, it is also possible that the light modulation unit 120.6 is moved by the motion-compensation actuator unit 120.14. Alternatively or additionally, it is also possible that the motion-compensation actuator unit 120.14 comprises a platform mounted on a gimbal, wherein the optical projection unit 120 is mounted on that platform. Furthermore, the motion-compensation actuator unit 120.14 can comprise one or more actuators to move the gimbal according to the counter-motion data 129.

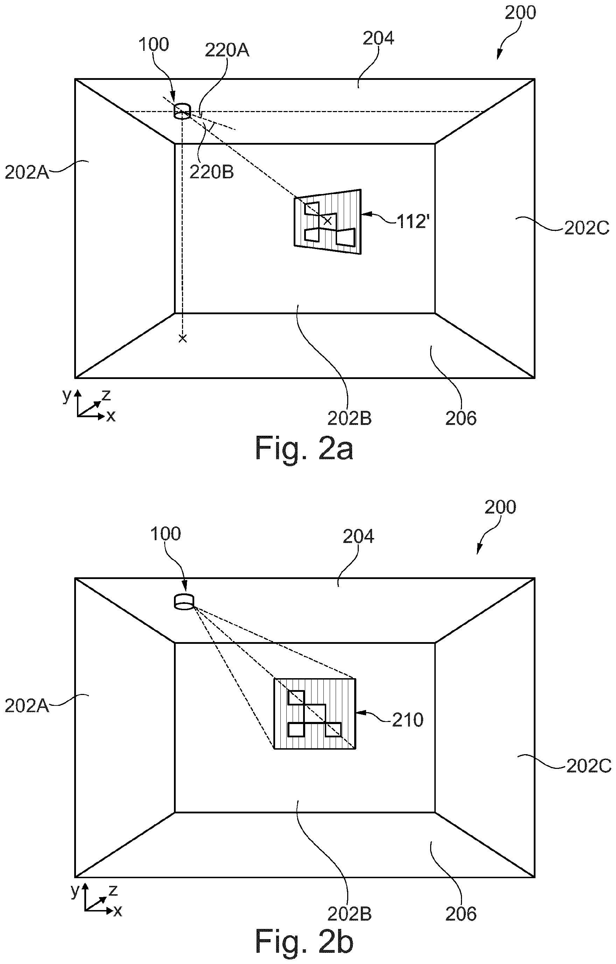

As part of the transformation of the marker image 104, the control unit 110 is configured to perform a keystone correction. Why this is important, will be discussed in the following with reference to Figs. 2a and 2b.

Fig. 2a shows the marker projection device 100 of Fig. 1a in an indoor space 200 when generating a light projection 112' without an adaption of the marker image 104.

The indoor space 200 shown in Fig. 2a is part of a room. The part of the room visible in Fig. 2a includes three walls 202A-C, a ceiling 204, and a floor 206. The marker projection device 100 is mounted on the ceiling 204 in an off-centered position with regard to the middle of the room. Walls 202A-C, ceiling 204, and floor 206 are all recognized by the marker projection device 100 as potential projection surfaces. In Fig. 2a, wall 202B has been selected by the marker projection device 100 as the projection surface.

In the example of Figs. 2a and 2b, a quadratic AprilTag is used as a fiducial marker. As can be seen from Fig. 2a, a generated light projection 112' of the marker image 104 onto the wall 202B without further adaption of the marker image 104 leads to a light projection 112' that is distorted due to the keystone effect and, as a result, might not be recognizable by a computer-vision system.

To overcome this shortcoming, the adaptation of the marker image 104 performed by the marker projection device 100 comprises a keystone correction using the depth information data 102, which provides information about an orientation of the selected projection surface relative to the optical projection unit 120, and the projection angle. In the example shown in Figs. 2a and 2b, the projection angle is given by the combination of angles 220A and 220B, which represent an angle of the projection in a plane parallel to the ceiling 204 and in a plane orthogonal to the ceiling 204, respectively.

Both information can be combined to determine a relative tilt between a projection path from the optical projection unit 120 to the selected projection surface 202B and an orientation of the projection surface 202B such as, for example, given by a surface normal of the selected projection surface 202B. Using the determined tilt, a two-dimensional keystone correction can be performed such that geometrical proportions of the adapted marker image when projected onto the selected projection surface are preserved with respect to the marker image 104 as originally provided. As a result, in light projection 112 shown in Fig. 2b, the geometrical proportions of the marker image are preserved.

In addition or alternatively to the keystone correction, in other embodiments the control unit 110 can be configured to perform a projection mapping as part of the transformation of the marker image 104 for projecting the marker image onto a selected projection surface. This can be particularly advantageous, when a selected projection surface is non-planar.

The room shown in Figs. 2a and 2b can be, for example, a work environment, in which the marker projection device 100 can be used to transform every visible surface to a potential anchor point for high accuracy AR tracking. Spatial computing applications in organizing working environments, from desks, to offices, to factories can benefit from having fiducial markers at their free disposal. In an example, when combined with a camera, a user may tap with his finger on a point on his working desk and anchors his virtual calendar there for the rest of the working day.

In an alternative scenario, the marker projection device can be place in the interior of a car to enhance a driving experience and help with registering useful information for example regarding parking assistance and navigation. Furthermore, the marker projection device 100 can assist overlaying virtual content on to physical elements like the gear shift, the wheel or on other surfaces of the cockpit.

The marker projection device can also be used in connection with AR tabletop games. Tracking errors in AR experiences are a big challenge in tabletop or board games played with AR glasses. Players need to interrupt the game experience to recalibrate or initialize an AR-Session breaking the immersion and exiting the circle of play. The marker projection device 100 can project markers whenever the AR experience starts to degenerate and keep a seamless experience throughout the whole duration of the board game. Game cards, like those used in RPG games, or in casinos, could be turned dynamic.

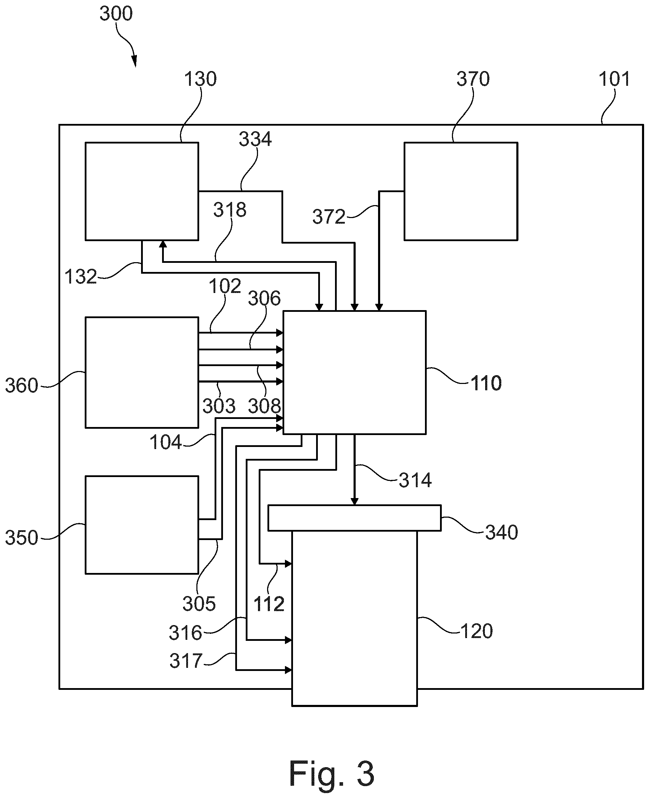

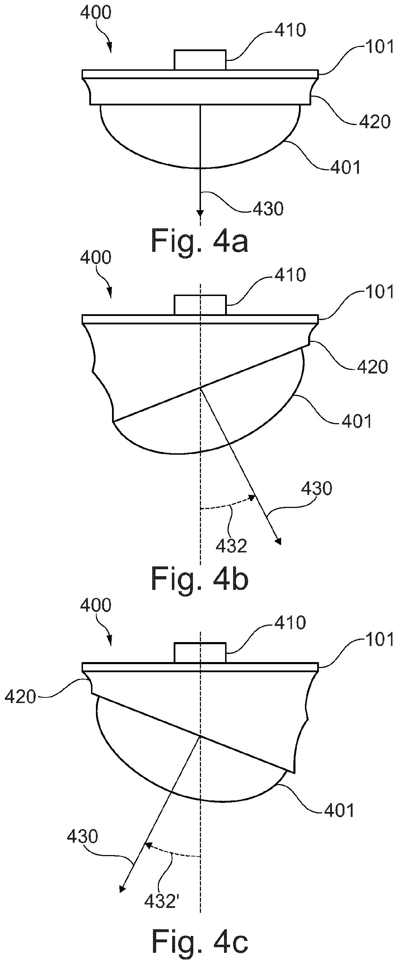

In the example of Figs. 1a and 1b, the position of the optical projection device 120 is fixed with regard to the other components of the marker projection device 100. In order to generate light projection 122 at different angles, the control unit 110 shown in Fig. 1a is configured to place the adapted marker image within the projection image 112 in accordance with the projection angle. However, other embodiments of the marker projection device can also comprise a moveable optical projection device 120. An example of such an embodiment will be described in the following with reference to Figs. 3 and 4.

Fig. 3 shows a marker projection device 300 that comprises a projection-direction actuator unit 340.

The marker projection device 300 comprises as the marker projection device 100 the optical projection unit 120. In the case of the marker projection device 300, the optical projection unit 120 is mechanically connected to the projection-direction actuator unit 340, which receives the projection angle 314 determined by the control unit 110 and is configured to adjust a direction of projection of the optical projection unit 120 in accordance with the determined projection angle 314. In the example, the projection-direction actuator unit 340 is configured to move the optical projection unit 120 in three degrees of freedom. While in Fig. 3, the projection-direction actuator unit 340 is only shown schematically, a more detailed example, how the projection-direction actuator unit 340 can be realized is shown in Figs. 4a-c.

Figs. 4a-c show an example of the projection-direction actuator unit 340 used with a marker projection device 400 similar to that of Fig. 3 oriented in different projection directions.

In the example of Figs. 4a-c, a side view of the marker projection device 400 is presented, in which the device housing 101 including a light-transparent housing 401 of the optical projection device 120 is shown. The device housing 101 further includes an attachment unit 410 for attaching the optical projection device 400 to, for example, a surface.

Furthermore, the marker projection device 400 of Figs. 4a-c includes a projection-direction actuator unit 340 that includes an actuator platform 420. In Fig. 4a, the actuator platform 420 is oriented in a neutral position such that a projection direction 430 of the optical projection unit 340 comprised by the marker projection device 400 is pointed downward.

If, for example, a selected projection surface is located further to the right or to left of the marker projection device 400, the actuator platform 420 can be moved such that the projection direction 430 of the optical projection unit 120 is moved to the right as indicated by angle 432 shown in Fig. 4b or moved to the left as indicated by angle 432' shown in Fig. 4c. In order to allow the movement of the actuator platform 420, the device housing 101 can be extendable to accommodate the movement of the platform 420.

Having described Figs. 4a-c, the description of the marker projection device 300 of Fig. 3 will now be continued.

A further difference between the marker projection device 100 and 300 is that the marker projection device 300 comprises a memory unit 350 that is configured to store the marker image 104. Thus, instead of receiving the marker image 104 through the communication interface 130, the control unit 110 receives the marker image 104 from the memory unit 350. In some embodiments, it is possible to store a plurality of marker images in the memory unit 350. In this case, information about which marker image is to be used can, for example, be provided to the marker projection device 300 through the communication interface 130. In other embodiments, the information required for the selection of the marker image can also be stored in the memory unit 350 itself. Alternatively, it is also possible that the marker image is selected through a user interface.

In addition to the memory unit 360, the marker projection device 300 also comprises a sensor suite 360 including a plurality of sensors. In the case of the marker projection device 300, the sensor suite 360 is configured to generate and provide the depth information data 102 to the control unit 110. To this end, the sensor comprises a LiDAR system. The LiDAR system comprises a laser for emitting a laser beam towards a target and a light detection sensor that is configured to measure a time it takes for the emitted light to bounce back from the target towards the LiDAR system. With this technology precise 3D models of the environment can be created. Nevertheless, other sensing technologies, of which a selection will be described in the following, can also be used.

As an alternative the LiDAR or in addition to the LiDAR a stereo vision camera can be used. Stereo vision involves using two or more cameras placed at slightly different viewpoints. By comparing the images from these cameras, the system can calculate the depth based on the parallax, i.e. the apparent displacement or difference in the apparent position of an object viewed along two different lines of sight.

As a further alternative or addition, a structured light sensor system can be used. The structured light sensor system comprises a sensor such as a camera for detecting a known pattern of light, often infrared. By observing how the pattern deforms when striking surfaces, the sensor can map out the shape and depth of the objects in the scene.

Another possibility for determining the depth information data, is the use of a Time-of-Flight (ToF) camera. ToF cameras are configured to measure a time it takes for a light signal, usually infrared to travel to an object and back to the camera. The measured time is then used to calculate the distance of each point in the camera's view.

A further possibility is the use of an ultrasonic sensor systems that is configured to emit a sound wave and measure an echo time when these waves bounce back from nearby objects. A delay determined through the time measurement is used to calculate a distance to the objects, providing depth information.

Furthermore, it is also possible to use a radar sensor system. Radar sensor systems are configured to send out radio waves and measure a time it takes for the radio waves to return after reflecting off objects.

As an alternative or addition, it is also possible to use a Laser rangefinder sensor system. Laser rangefinder sensor systems are configured to emit a laser beam towards a target object. The laser beam is then reflected back to the Laser rangefinder sensor system. Through measuring a time of the return of the light, distances to objects can be determined.

In addition or alternatively to the generation of the depth information data 104, the sensor suite 360 can also be configured to determine other information about the physical surrounding of the marker projection device 300. In the example shown in Fig. 3, the sensor suite 360 is also configured to determine orientation data 306 indicative of a positioning of the marker projection device 300 in the environment relative to a frame of reference. The orientation data 306 is received by the control unit 110, which is configured to generate the projection image 112 using the orientation data 306 such that the visual appearance of the fiducial marker is correctly oriented relative to the frame of reference when projected on the selected projection surface. In the particular example of marker projection device 300, the sensor suite 360 comprises a magnetic sensor to determine an orientation of the marker projection device relative to the magnetic field of the Earth.

In addition to the orientation data, in some embodiments like in the one shown in Fig. 3, the sensor suite 360 can additionally comprise sensors to determine color information data 307 indicative of a color of the selected projection surface. Furthermore, the control unit 110 can be configured to receive the color information data 307 and to adjust a color of the adapted marker image using the color information data 307.

In the embodiment shown in Fig. 3, the sensor suite 360 also comprises sensors to determine an ambient light condition in the environment of the marker projection device 300 and is configured to provide ambient-light-condition data 308 indicative of that ambient light condition. Furthermore, the control unit 110 is configured to receive the ambient-light-condition data and, using the ambient-light-condition data 308, to determine and provide a brightness level 316 required for the projection of the fiducial marker. Moreover, the optical projection unit 120 is configured to receive the brightness level 316 and adjust a brightness of the light projection 122 according to the determined brightness level 316. In the example, the adjustment of the brightness of the light projection 122 is realized by an adjustment of a brightness of the light source 120.4. Alternatively, among other realizations, it is also possible to how the light emitted by the light source 120.4 is modulated by the light modulation unit 120.6 in order to change the brightness of the light projection 122.

In addition to the adjustment of brightness, the marker projection device 300 can also comprise an auto-focus mechanism for projecting a clear image onto the selected surface independent of the distance between the marker projection device 300 and the selected projection surface. To this end, the control unit 110 of the marker projection device 300 is configured to determine a distance 317 between the optical projection unit 300 and the selected projection surface and provide that distance 300 to the optical projection unit 120. In addition, the optical projection unit 120 is configured to adjust the projection optics 120.8 according to the determined distance to focus the projection of the generated image onto the selected projection surface.

As an alternative, ambient-light-condition data 308, the color information data 307, and/or the distance 317 can also be received from an external sensor through the communication interface 130.

In the description of the marker projection device 100, it was already described that the control unit 110 is configured to select one out of the one or more identified projection surfaces. With reference to Fig. 3, different approaches how the at least one projection surface is being selected will be described in the following.

One approach that can be taken is that selection criteria 305 for selecting the at least one of the one or more potential projection surfaces are stored in the memory unit 350. In this approach, the control unit 110 receives the selection criteria 305 from the memory unit 350 and is configured to select the at least one of the one or more potential projection surfaces using the stored selection criteria 305. Selection criteria can for example include minimum dimensions of a projection surface, an orientation of a projection surface or the distance of a projection surface relative to the marker projection device 300. Selection criteria can also include tracking points of, for example, GPS or Visual Positioning Systems.

As part of a different approach, in the marker projection device 300, the control unit 110 is configured to provide potential-projection-surface data 318 indicative of the identified one or more potential projection surfaces at the communication interface 130 for transmission to an external device such as an augmented-reality device. Moreover, the control unit 110 is configured to select the one out of the one or more potential projection surfaces according to selection data 332 received through the communication interface 130 in response to the provided potential-projection-surface data 318.

A further approach for the selection of the at least one projection surface is to selection a projection surface according to a user input. To this end, the marker projection device 300 comprises a user interface 370 for receiving user input data 372. Furthermore, the control unit 110 is configured to select the one out of the one or more potential projection surfaces according to the user input data 372.

Other important factors regarding the light projection of the fiducial marker is when the light projection is to be turned on and when the light projection is to be turned off. In order to, for example, recalibrate positioning sensors or reset SLAM algorithms of an external AR device, a light projection of only a short time span such as a few seconds or even less than a second is required.

In the example of the marker projection device 300, the control unit 110 receives timing data 334 through the communication interface 130. The timing data 334 includes information about when a light projection is to be started and when a light projection is to be turned off. Alternatively, it is also possible that the marker projection unit 300 is configured to determine when to start a light projection and when to end the light projection by itself, for example, through timing criteria stored in the memory unit 350.

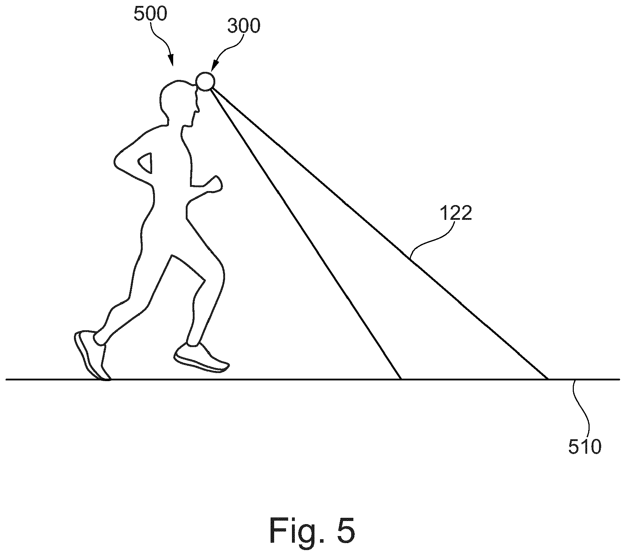

In the example of Figs. 2a and 2b, the marker projection device 100 was installed on a fixed position in an indoor space. However, it is also possible that the marker projection device 300 moves together with the AR user. Such a scenario is illustrated in Fig. 5.

Fig. 5 shows an AR user 500 who is running and has the marker projection device 300 of Fig. 3 strapped to their forehead.

In the example of Fig. 5, the marker projection device 300 is configured to periodically project a fiducial marker at a certain distance on the ground 510 in front of the runner 500. This way, an AR device such as AR glasses also worn by the user 500 can precisely register a virtual running mate in front of the AR user 500.

While running, the AR user 500 might move its head and, as a result, the light projection 122 might be projected into a wrong direction. To this end, the sensor suite 360 of the marker projection device 300 comprises a motion sensor that is configured to provide motion data 303 indicative of a movement of the marker projection device 300. To this end, the sensor suite 360 can, for example, include cameras, accelerometers, gyroscopes, magnetometers, GPS, and proximity sensors. In other embodiment, pose estimation and motion information is harnessed from the AR-Session running on the AR-Device with the goal to adjust the needed projection parameters.

Furthermore, the control unit 110 is configured to generate an updated projection angle using the determined projection angle 314 and the motion data 303 and to generate an updated projection image using the updated projection angle. Furthermore, the control unit 110 is configured to provide the updated projection image to the optical projection unit 120, for which the optical projection unit 120 creates an updated light projection.

In the example shown in Fig. 5, the marker projection device 300 might be programmed to constantly project a fiducial marker two meters ahead of the athlete 500 wearing the AR glasses. Due to the stable display of the marker on the ground, an animated 3D character or any other type of complex virtual content, can be registered in AR very accurately, and appear to convincingly run side by side or in front of the athlete. Alternatively, the marker projection device 300 can project, for example, fiducial markers for a duration of one tenth of a second, every 5 or 10 seconds, depending on how often sensors of the AR device have to be recalibrated in a hybrid tracking approach.

In a dynamic environment, moving objects or people, can disrupt the alignment between the avatar and the physical world. In a dynamic environment, many features (like moving cars, people, or changing light conditions) come and go introducing unpredictability, making it harder for the AR device to anticipate changes and maintain stable registration. But there usually are various flat surfaces around the user 500 that can be used as projection targets and as additional tracking assistance. In this scenario, the marker projection device fires fiducial markers autonomously on suitable surfaces, adapting to changes in the environment maintaining a convincing AR avatar visualization over a long period of time.

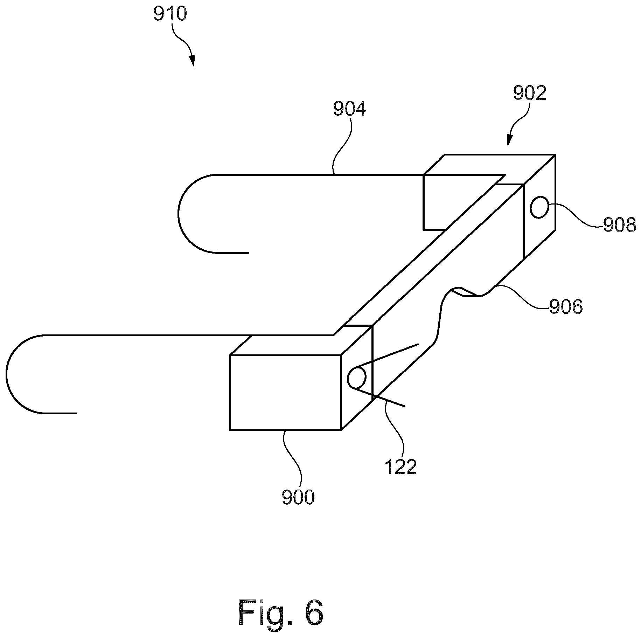

As an alternative to the standalone approach of the marker projection device 610, another possibility is that the marker projection device is part of an AR system. Such an embodiment will be described in the following with reference to Fig. 6.

Fig. 6 shows an augmented reality system 910 comprising an AR device 902 and a marker projection device 900 mounted on a spectacle frame 904.

In the AR system 910, the AR device 902 comprises a control unit (not shown) that is configured to provide visualization information data and a screen 906 configured to overlaying a visual representation of the visualization information data with visual information from a physical environment of the augmented reality device 902. Furthermore, the AR device comprises a sensor suite 908, which includes, amongst other sensors, a laser range finder sensor system for determining depth information data.

Located on an opposite side of the spectacle frame 904, the marker projection device 900 is arranged, which is configured to display a light projection 122 of a fiducial marker. In the example of Fig. 6, the marker projection device 900 does not comprise any sensors. Instead, the marker projection device 900 comprises a wireless communication interface for receiving the required depth information data for the light projection from the sensor suite of the AR device 902. In the example of the AR system 910, the marker projection device 900 is arranged off-centered with respect to the spectacle frame. In other embodiment, to further increase a range of projection, the device can also be attached at a center position with respect to the spectacle frame.

In other embodiments, it is also possible that a single optical projection unit is used for displaying the visual representation of the visualization information data as well as the light projection of the fiducial marker. In other embodiments, marker projection device and AR device can also be further integrated with each other such as by using a single control unit. This can be advantageous as the two devices have similar positional and rotational coordinates, which can lead to simplified calculations saving computational resources and minimizing latency.

The AR system 910 can, for example, be used in a medical setting such as during surgery to support the surgeon. As such the marker projection device 900 can be used to project fiducial markers onto a patient's body to improve registering of virtual objects during the treatment.

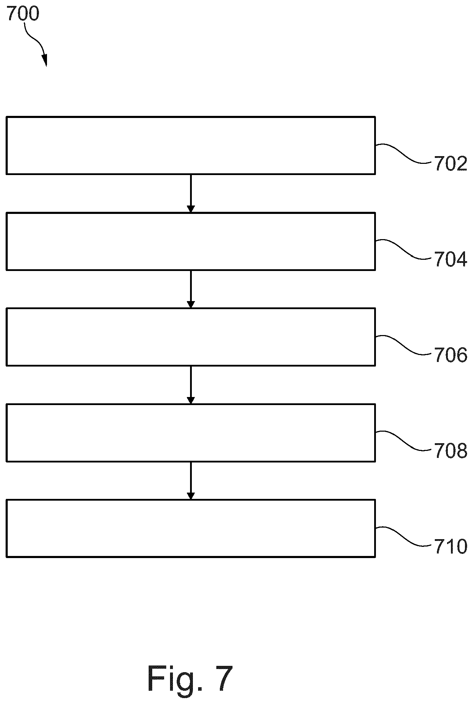

In the following, embodiments of a method for projection of a fiducial marker according to the second aspect of this disclosure will be described with reference to Figs. 7 to9.

Fig. 7 shows a method 700 for projection of a fiducial marker for the case of a stationary marker projection device.

The method 700 for projection of a fiducial marker comprises the following steps.

In an initial step 702 depth information data indicative of distances to surfaces in an environment of the marker projection device and a marker image indicative of a visual appearance a fiducial marker are received.

In a following step 704 one or more potential projection surfaces in the environment using the depth information data are identified.

This step 704 is followed by a step 706, in which one of the one or more potential projection surfaces are selected and a projection angle for the selected projection surface is determined.

In a step 708, using the depth information data and the projection angle for the selected projection surface, a projection image comprising an adapted marker image, wherein the adapted marker image is generated by transforming the marker image such that geometrical proportions of the visual appearance of the fiducial marker are preserved when projected on the selected projection surface is generated.

In a final step 710, a light projection according to the projection image is generated.

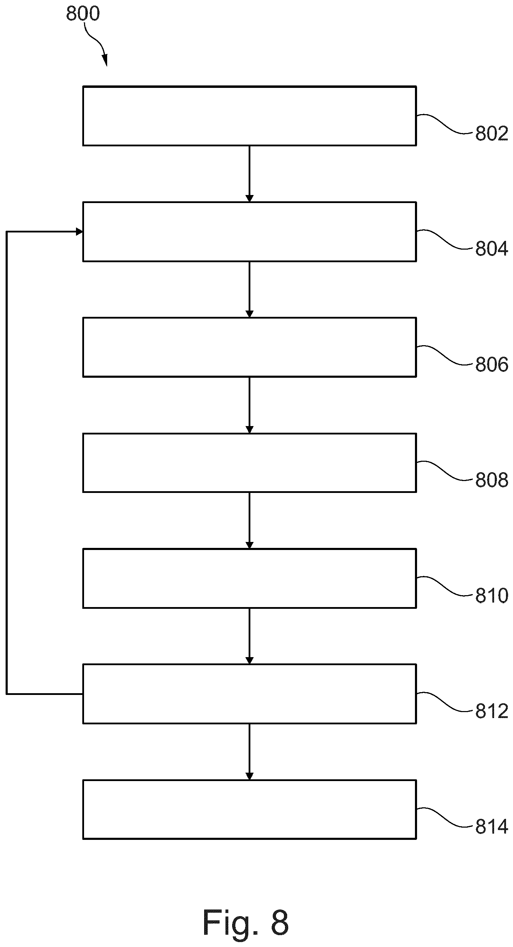

When the marker projection device moves with the AR user, the light projection has to be periodically updated. An example for a method that includes a periodic update of the light projection is described with reference to Fig. 8.

Fig. 8 shows a method 800 for projection of a fiducial marker for the case of a moving marker projection device.

The method 800 starts with a method step 802, which comprises all the method steps of method 700.

In a following step 804, motion data indicative of a movement of the marker projection device is received.

In a step 806, an updated projection angle using the determined projection angle and the motion data is generated.

In a following step 808, an updated projection image using the updated projection angle is generated.

In a subsequent step 810, the updated projection image is provided to the optical projection unit, which generates a light projection according to the updated projection image.

In a step 812, it is checked whether the light projection should still be active. If so, the method returns to step 804. If not, the method continues with a step 814, in which the light projection is turned off.

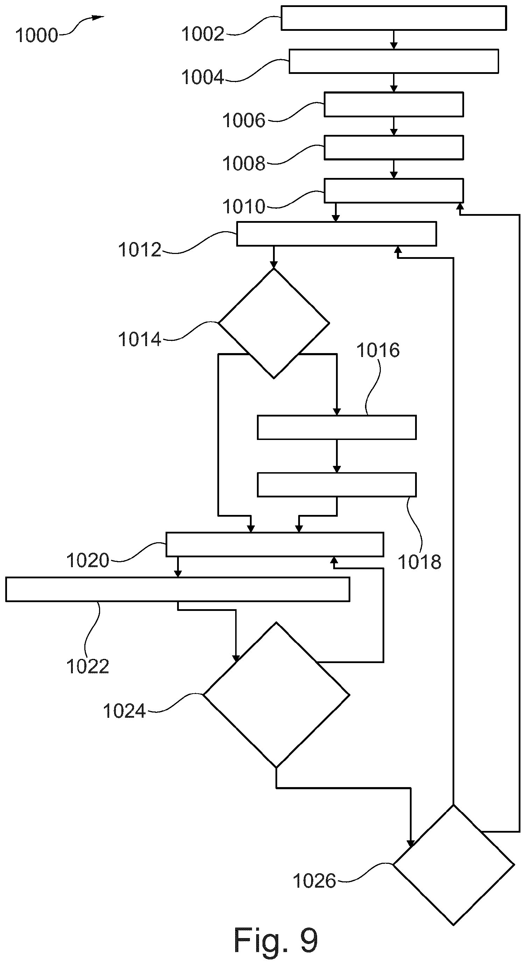

Fig. 9 shows a method 1000 for projection of a fiducial marker which can be used with a marker projection device comprising a projection-direction actuator unit.

The method 1000 start with a step 1002, in which depth information data indicative of distances to surfaces in an environment of the marker projection device and a marker image indicative of a visual appearance a fiducial marker are received.

In a following step 1004, using the depth information data, one or more potential projection surfaces in the environment of the marker projection device are identified.

The step 1004 is followed by a step 1006, in which one of the one or more potential projection surfaces are selected.

In a step 1008, a projection angle for the selected projection surface is determined. The projection angle determined in the step 1008 is indicative of an angle under which light has to be emitted from an optical projection unit, which is used for generating the light projection of the marker image, so that the marker image is projected onto the selected projection surface.

In a step 1010, a direction of projection of the optical projection unit is adjusted according to the determined projection angle using the projection-direction actuator unit.

In a step 1012, using the depth information data and the projection angle for the selected projection surface, a projection image comprising an adapted marker image, wherein the adapted marker image is generated by transforming the marker image such that geometrical proportions of the visual appearance of the fiducial marker are preserved when projected on the selected projection surface, is generated. In addition, in this step, further parameters such as a throw ratio of the projection, a zoom ratio of the projection, and a focus of the projection can be adjusted using to the depth information data of the selected projection surface and the projection angle.

In a step 1014, it is determined whether a light source that is part of the optical projection unit and required for the light projection of the projection image has been activated. If yes, the method continues with step 1020. If not, in a step 1016, the light source is activated. In a following step 1018, the light emitted by the light source is modulated according to the projection image.

The activation of the light source and the modulation of the emitted light leads to a light projection of the projection image indicated by step 1020.

In a step 1022, motion data indicative of a movement of the marker projection device is received.

In a step 1024, it is evaluated whether due to the relative movement between the marker projection device and its surrounding indicated by the motion data, the light projection has to be updated. If not, the method returns to step 1020, in which the movement of the marker projection device is further monitored. If yes, the method continues with a step 1026.

In the step 1026, it is evaluated whether due to the movement of the marker projection device the projection direction of the optical projection unit has to be updated. If yes, the method continues with the step 1010. Otherwise the method continues with the step 1012. In both steps 1010 and 1012, after the receipt of motion data indicative of a changed position, the motion data is used in the adjustment of the projection direction and the projection image.

In summary, the disclosure describes a marker projection device (100) for use in an augmented-reality system. The marker projection device (100) comprises a control unit (110) that receives depth information data (102) indicative of distances to surfaces in the environment of the marker projection device (100) and a marker image (104) indicative of a visual appearance of a fiducial marker. Furthermore, the control unit (110) is configured: to identify one or more potential projection surfaces (202A-C) in the environment using the depth information data (102); to select one (202B) of the one or more potential projection surfaces; to determine a projection angle (314) for the selected projection surface; and to generate, using the depth information data (102) and the projection angle for the selected projection surface, a projection image comprising an adapted marker image, wherein the control unit (110) is configured to generate the adapted marker image by transforming the marker image such that geometrical proportions of the visual appearance of the fiducial marker are preserved when projected on the selected projection surface (202B). In addition, the marker projection device (100) comprises an optical projection unit (120) that receives the projection image and is configured to generate a light projection (122) according to the projection image.

## Claims

1. A marker projection device (100) for use in an augmented-reality system, comprising:
a control unit (110) that receives depth information data (102) indicative of distances to surfaces in the environment of the marker projection device (100) and a marker image (104) indicative of a visual appearance of a fiducial marker and is configured
to identify one or more potential projection surfaces (202A-C) in the environment using the depth information data (102),
to select one (202B) of the one or more potential projection surfaces,
to determine a projection angle (314) for the selected projection surface, and
to generate, using the depth information data (102) and the projection angle for the selected projection surface, a projection image comprising an adapted marker image, wherein the control unit (110) is configured to generate the adapted marker image by transforming the marker image such that geometrical proportions of the visual appearance of the fiducial marker are preserved when projected on the selected projection surface (202B); and
an optical projection unit (120) that receives the projection image and is configured to generate a light projection (122) according to the projection image.

2. The marker projection device (100) of claim 1, wherein the transformation of the marker image (104) comprises a keystone correction and/or a projection mapping.

3. The marker projection device (300) of claim 1 or 2, wherein the control unit (120) is configured
to receive motion data (303) indicative of a movement of the marker projection device (300),
to generate an updated projection angle using the determined projection angle and the motion data (303),
to generate an updated projection image using the updated projection angle, and
to provide the updated projection image to the optical projection unit (120).

4. The marker projection device (300) of any of the preceding claims, comprising:
a projection-direction actuator unit (340) that is mechanically connected with the optical projection unit (120) and that receives the determined projection angle (314) and is configured to adjust an orientation of the optical projection unit (120) in accordance with the determined projection angle (314).

5. The marker projection device (100) of any of the preceding claims, comprising:
an inertial measurement unit (120.10) that is configured to determine and provide inertia measurement data (128) indicative of a motion of the optical projection unit (120),
a compensation controller (120.12) that receives the inertia measurement data (128) and is configured to determine, using the inertia measurement data (128), counter-motion data (129) indicative of a required motion of the optical projection unit (120) to at least partly counteract the motion of the optical projection unit (120), and
a motion-compensation actuator unit (120.14) mechanically connected with the optical projection unit (120) that receives the counter-motion data (129) and is configured to perform a movement of the optical projection unit (120) according to the counter-motion data (129).

6. The marker projection device (300), wherein the control unit (110) is configured
to receive orientation data (306) indicative of a positioning of the marker projection device (300) in the environment relative to a frame of reference,
to generate the projection image using the orientation data (306) such that the visual appearance of the fiducial marker is correctly oriented relative to the frame of reference when projected on the selected projection surface.

7. The marker projection device (300) of any of the preceding claims, wherein the control unit (110) is configured
to receive color information data (307) indicative of a color of the selected projection surface, and
to adjust a color of the adapted marker image using the color information data (307).

8. The marker projection device (300) of any of the preceding claims, wherein the control unit (110) is configured to determine a distance (317) between the optical projection unit (120) and the selected projection surface, and
the optical projection unit (120) comprises a lens system (120.8) for projecting the projection image onto the selected projection surface, wherein
the optical projection unit (120) is configured to adjust the lens system (120.8) according to the determined distance (317) to focus the light projection (122) on the selected projection surface.

9. The marker projection device (300) of any of the preceding claims, wherein
the control unit (110) receives ambient-light-condition data (308) indicative of an ambient light condition in the environment of the marker projection device (300) and is configured, using the ambient-light-condition data (308), to determine a brightness level (316) required for the projection of the fiducial marker, and
the optical projection unit (120) receives the brightness level (316) and is configured to adjust a brightness of the light projection (122) according to the determined brightness level (316).

10. The marker projection device (300) of any of the preceding claims, comprising
a memory unit (350) for storing selection criteria (305) for selecting the at least one of the one or more potential projection surfaces, wherein
the control unit (110) is configured to select the at least one of the one or more potential projection surfaces using the stored selection criteria (305).

11. The marker projection device (300) of any of the preceding claims, comprising
a communication interface (130) for communicating with an external device, wherein
the control unit (110) is configured
to provide potential-projection-surface data (318) indicative of the identified one or more potential projection surfaces at the communication interface (130), and
to select the one out of the one or more potential projection surfaces according to selection data (332) received through the communication interface (130) in response to the provided potential-projection-surface data (318).

12. The marker projection device (300) according to any of the preceding claims, comprising:
a user interface (370) for receiving user input data (372), and wherein
the control unit (110) is configured to select the one of the one or more potential projection surfaces according to the user input data (372).

13. The marker projection device (300) according to any of the preceding claims, comprising
a sensor unit (360) that is configured to determine and provide the depth information data (102).

14. An augmented reality system (910) comprising:
the marker projection device (900) of any of the preceding claims, and
an augmented-reality device (902) comprising:
a screen (906) configured to receive visualization information data and to overlay a visual representation of the visualization information data with visual information from a physical environment of the augmented reality device (902).

15. Method (700) for projection of a fiducial marker, comprising the following steps:
receiving depth information data indicative of distances to surfaces in an environment of the marker projection device and a marker image indicative of a visual appearance a fiducial marker (702),
identifying one or more potential projection surfaces in the environment using the depth information data (704),
selecting one of the one or more potential projection surfaces (706), generating, using the depth information data and the projection angle for the selected projection surface, a projection image comprising an adapted marker image, wherein the adapted marker image is generated by transforming the marker image such that geometrical proportions of the visual appearance of the fiducial marker are pre-served when projected on the selected projection surface (708), and
generating a light projection according to the projection image (710).
